# FASCICULE DE BREVET EUROPEEN

(11) **EP 2 232 032 B1**
(45) Date de publication et mention de la délivrance du brevet: **11.01.2017**
(21) Numéro de dépôt: 08872552.8
(22) Date de dépôt: 17.12.2008
(51) Int. Cl.: F02D 9/10, F16K 1/22, F16K 1/32, F02D 9/02

(54) **VOLET D'OBTURATION DE CONDUITE DE FLUIDE POUR VÉHICULE AUTOMOBILE**
KLAPPE ZUR BLOCKIERUNG EINES FLÜSSIGKEITSKANALS FÜR EIN AUTO
FLAP FOR BLOCKING A FLUID DUCT FOR AN AUTOMOBILE

(30) Priorité: 20.12.2007 FR 0708943
(43) Date de publication de la demande: 29.09.2010
(73) Titulaire: Valeo Systèmes de Contrôle Moteur, 95892 Cergy Pontoise (FR)
(72) Inventeur: MACHET, François, 78300 Poissy (FR); FALCHI, Danilo, 95800 Cergy (FR)
(86) Numéro de dépôt international: PCT/FR2008/001765
(87) Numéro de publication internationale: WO 2009/103893

(56) Documents cités:
- DE-A1-102004 050 791
- US-A1- 2006 231 070
- US-B1- 7 117 846

## Description

L'invention concerne le domaine des doseurs de gaz, et plus particulièrement les doseurs en plastique utilisés dans les véhicules automobiles.

Un doseur à air permet, par exemple, de contrôler la quantité d'air à l'admission dans un moteur à combustion interne. Un doseur, disposé dans une conduite d'air, comprend un volet d'obturation fixé de manière solidaire à un arbre d'entraînement rotatif monté dans ladite conduite d'air. L'arbre d'entraînement est classiquement guidé en rotation par deux paliers de guidage montés dans des ouvertures formées dans la conduite d'air pour le passage de l'arbre.

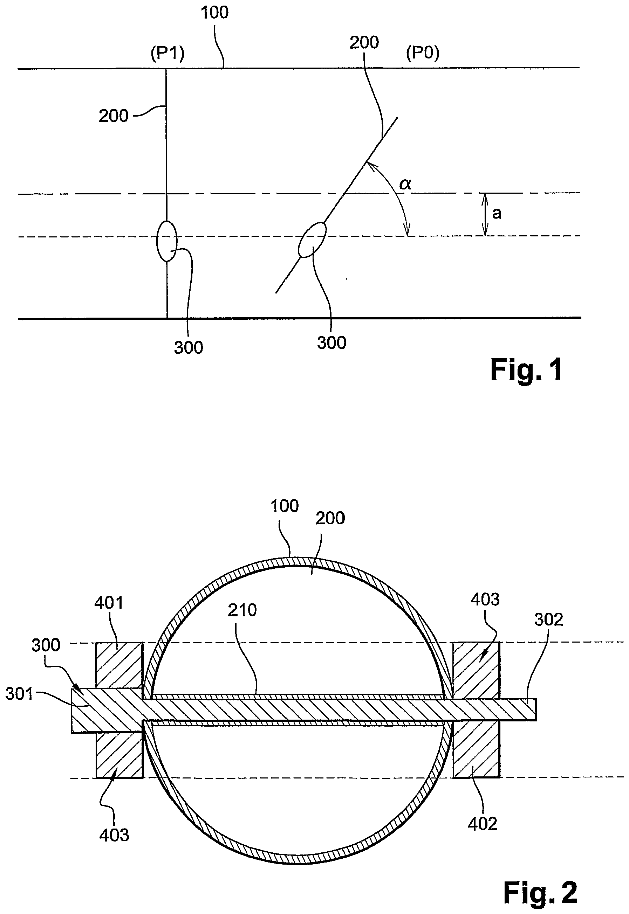

En référence à la figure 1, lors de la rotation de l'arbre d'entraînement 300 dans la conduite d'air 100, le volet 200, solidaire de l'arbre 300, pivote d'un angle α pour contrôler l'ouverture de la conduite d'air. L'air circule dans la conduite 100 lorsque le volet est dans la position P₀ et est bloqué dans la position P₁.

Traditionnellement, pour fixer un volet métallique à un arbre d'entraînement, il est connu, par la demande de brevet US 2006/0138684 A1, de positionner le volet dans un logement ménagé dans l'arbre puis de le visser. US 2006/0231070 décrit en outre type de boitier papillon traditionnel. Il est également connu, selon une autre forme de réalisation, de ménager une fente dans la longueur de l'arbre d'entraînement pour y insérer le volet métallique, celui-ci étant ensuite vissé ou serré fortement pour assurer son maintien en position.

En résumer, lors du montage, ces volets métalliques nécessitent tout d'abord d'être positionnés, soit dans un logement ou une fente, puis d'être fixés. Un tel procédé de montage n'est adapté que pour des volets métalliques que l'on peut percer ou serrer fortement.

La tendance actuelle vise à réduire la masse des composants du moteur. Ainsi, il a été proposé de remplacer les volets métalliques classiques, relativement lourds, par des volets légers en matière plastique. Mais, de tels volets sont fragiles et ne peuvent pas être percés ou serrés sans se fissurer ou se briser.

Afin de résoudre le problème du maintien d'un volet plastique sur son arbre, une première alternative consiste à mouler, en une pièce unique monobloc, le volet et l'arbre d'entraînement. Cette solution immédiate, connue par exemple par le brevet US 6,986,860 B2, ne permet pas de monter le volet monobloc dans une conduite d'air tubulaire standard. En effet, il est nécessaire de recourir à une conduite en deux parties agencées pour s'emboîter autour du volet monobloc. Un tel volet monobloc n'est pas adapté et nécessite des modifications structurales importantes du doseur et de son environnement.

En référence à la figure 2, une deuxième alternative consiste à ménager un alésage 210 dans le volet d'obturation 200, l'arbre d'entraînement 300 traversant successivement une première ouverture 403 formée dans la conduite 100, l'alésage 210 du volet 200 et une deuxième ouverture 403 formée dans la conduite 100. Deux paliers de guidage 401, 402 sont respectivement montés dans les ouvertures 403 pour guider l'arbre 300 qui est entraîné en rotation par un moteur non représenté. Par la suite, on désigne par extrémité d'entraînement 301, l'extrémité de l'arbre 300 reliée au moteur et par extrémité libre son extrémité opposée.

Afin de ne pas encombrer la conduite de gaz 100, l'alésage doit posséder un diamètre de dimension faible tandis que l'arbre doit posséder un diamètre suffisamment grand pour être entraîné en rotation avec précision. Il est alors nécessaire de diminuer le diamètre de l'arbre 300 à son extrémité libre 302 pour que celle-ci puisse être insérée dans l'alésage 210, les extrémités d'entraînement 301 et libre 302 de l'arbre 300 n'ayant alors pas le même diamètre. Afin de conserver un doseur sensiblement symétrique de part et autre du volet 200, des paliers de guidage 401, 402, ayant des diamètres de berceau différents, sont utilisés pour guider chacune des extrémités de l'arbre 300 comme représenté sur la figure 2. Cependant, l'utilisation de deux paliers différents 401, 402 engendre un guidage inégal de part et autre du volet, un des paliers s'usant plus vite que l'autre.

De plus, l'utilisation de deux types de paliers différents pour un même doseur engendre des coûts importants, aussi bien pour la fabrication que pour le service après-vente. Cette solution n'est pas satisfaisante car elle ne résout que partiellement le problème.

Le but de l'invention est de résoudre certains de ces inconvénients et de fournir un doseur symétrique utilisant des paliers standards identiques sans nécessiter de modifications importantes du doseur d'air ou de son environnement.

Ainsi, l'invention concerne un ensemble d'un volet d'obturation d'une conduite de fluide et d'un arbre d'entraînement dudit volet s'étendant dans un alésage formé dans le volet d'obturation,
- l'arbre d'entraînement étant mené en rotation, d'un côté du volet, par une portion d'entraînement de l'arbre montée tourillonnante dans un premier palier rotatif,
- l'arbre d'entraînement s'étendant de la portion d'entraînement jusqu'à une portion d'extrémité,
ensemble caractérisé par le fait que ladite portion d'extrémité est recouverte d'une coiffe, solidaire en rotation de l'arbre, de l'autre côté du volet, la coiffe étant montée tourillonnante dans un deuxième palier de même diamètre de berceau que le premier.

Un tel arbre d'entraînement recouvert d'une coiffe permet un montage simple et une usure répartie des paliers

Bien que le problème soit né de la fixation d'un volet plastique, le demandeur ne souhaite pas se limiter seulement à ce type de volet, l'invention s'appliquant de manière similaire à un volet métallique.

De préférence, la portion d'extrémité de l'arbre d'entraînement de l'arbre d'entraînement comprend un méplat de liaison agencé pour s'emboîter dans un logement de blocage ménagé dans la coiffe.

Le méplat de liaison permet de relier l'arbre et la coiffe par emboîtement tout en autorisant la transmission du mouvement de rotation.

De préférence, deux moyens d'étanchéité identiques sont montés respectivement sur l'arbre d'entraînement et la coiffe.

L'utilisation de moyens d'étanchéité identiques permet de diminuer les coûts de fabrication et de stockage.

De préférence encore, l'alésage formé dans le volet d'obturation est de section oblongue.

Une section oblongue permet avantageusement d'assurer un détrompage lors de l'insertion de l'arbre dans l'alésage du volet.

De préférence toujours, le logement de blocage comprend au moins une rainure longitudinale pour l'échappement de l'air lors de l'insertion de l'arbre d'entraînement dans la coiffe.

L'invention concerne également un doseur simple de conduite de fluide comprenant un ensemble d'un volet d'obturation d'une conduite de fluide et d'un arbre d'entraînement dudit volet.

L'invention concerne aussi un doseur double de conduite de fluide comprenant deux ensembles d'un volet d'obturation d'une conduite de fluide et d'un arbre d'entraînement dudit volet.

De préférence, le doseur, simple ou double, est en plastique ce qui permet de manière avantageuse de réduire sa masse.

L'invention concerne également un procédé de montage d'un volet d'obturation dans une conduite de fluide dans laquelle sont formées des ouvertures pour le passage d'un arbre d'entraînement du volet d'obturation, procédé dans lequel:
- on introduit le volet dans la conduite par une section de passage de fluide de la conduite;
- on introduit une coiffe dans une première ouverture de la conduite, d'un côté du volet;
- on introduit l'arbre d'entraînement successivement:
   i. dans une deuxième ouverture de la conduite de l'autre côté du volet;
   ii. dans un alésage formé dans le volet d'obturation; et
   iii. dans un logement de blocage formé dans la coiffe, la coiffe étant alors solidaire en rotation de l'arbre d'entraînement.

Un tel procédé de montage permet avantageusement de disposer le volet facilement dans la conduite, la coiffe participant au centrage dudit volet.

L'invention sera mieux comprise à l'aide du dessin annexé sur lequel :
- la figure 1 représente schématiquement un volet d'obturation dans une conduite de gaz selon deux positions P₀ et P₁;
- la figure 2 représente une vue schématique en coupe d'une conduite de gaz dans laquelle est monté un volet d'obturation selon l'art antérieur ;
- la figure 3 représente une vue en éclaté d'un volet d'obturation avec son arbre d'entraînement selon l'invention ;
- la figure 4 représente le volet d'obturation et l'arbre d'entraînement de la figure 3 montés ensemble avec une coiffe;
- la figure 5 représente le volet d'obturation et l'arbre d'entraînement des figures 3 et 4 avec des paliers de guidage et des moyens d'étanchéité montés sur l'arbre; et
- la figure 6 représente la coiffe de la figure 3.

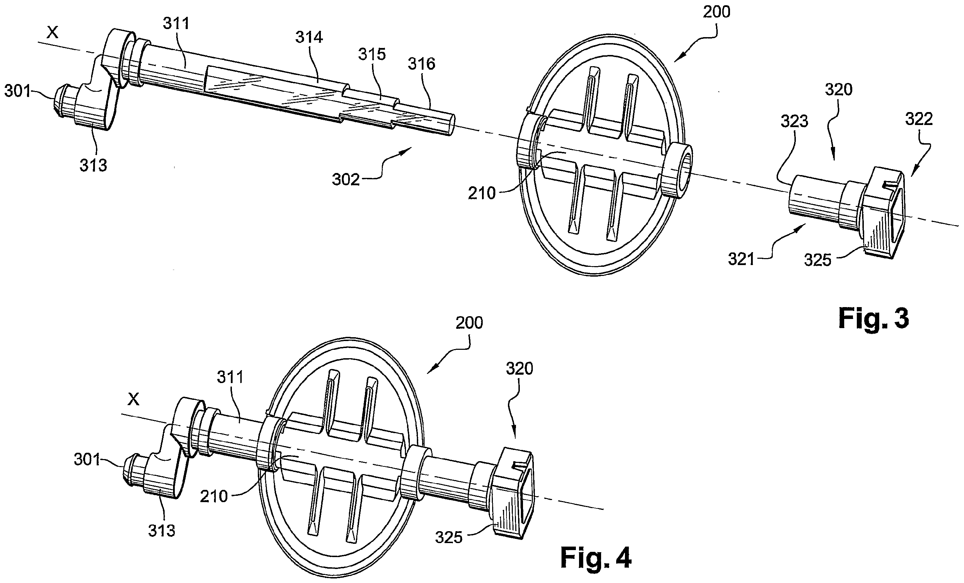

En référence à la figure 4, un volet 200 d'obturation d'une conduite de gaz, non représentée, est entraîné par un arbre d'entraînement 300, lui-même entraîné par un moteur, non représenté, à son extrémité d'entraînement 301. L'arbre d'entraînement 300, représenté plus en détails sur la figure 3, est recouvert à son extrémité libre 302, opposée à celle d'entraînement 301, par une coiffe 320 solidaire en rotation de l'arbre 300.

Par la suite, on désigne par extrémité d'entraînement, l'extrémité recevant directement le couple moteur et, par extrémité libre, son extrémité opposée. Ainsi, en référence à la figure 3, l'arbre d'entraînement 300 comprend une extrémité d'entraînement 301 et une extrémité libre 302, la coiffe 320 comprenant, pour sa part, une extrémité d'entraînement 321 et une extrémité libre 322.

### ▪ l'arbre d'entraînement 300

Toujours en référence à la figure 3, l'arbre d'entraînement 300 s'étend selon un axe X. Son extrémité d'entraînement 301 comprend un bras moteur 313, s'étendant perpendiculairement à l'axe X et agencé pour transmettre le mouvement de rotation du moteur à l'arbre d'entraînement 300.

Lorsque l'on considère l'arbre d'entraînement 300 dans la direction X, de son extrémité d'entraînement 301 à son extrémité libre 302, celui-ci présente quatre portions concentriques successives 311, 314, 315 et 316 dont la section est décroissante. La portion de plus grand diamètre 311, dite portion d'entraînement 311, est de section sensiblement circulaire afin de permettre un guidage précis au moyen d'un palier de guidage. La seconde portion 314, désignée portion centrale 314, est de section oblongue dont le diamètre d'encombrement maximal correspond au diamètre de la portion d'entraînement 311. Les portions 315, 316, de diamètre plus faible, forment la portion d'extrémité 312 de l'arbre d'entraînement 300. La portion 316, dont le diamètre est le plus faible, comprend une face plate formant un méplat de liaison avec la coiffe 320.

### ▪ La coiffe 320

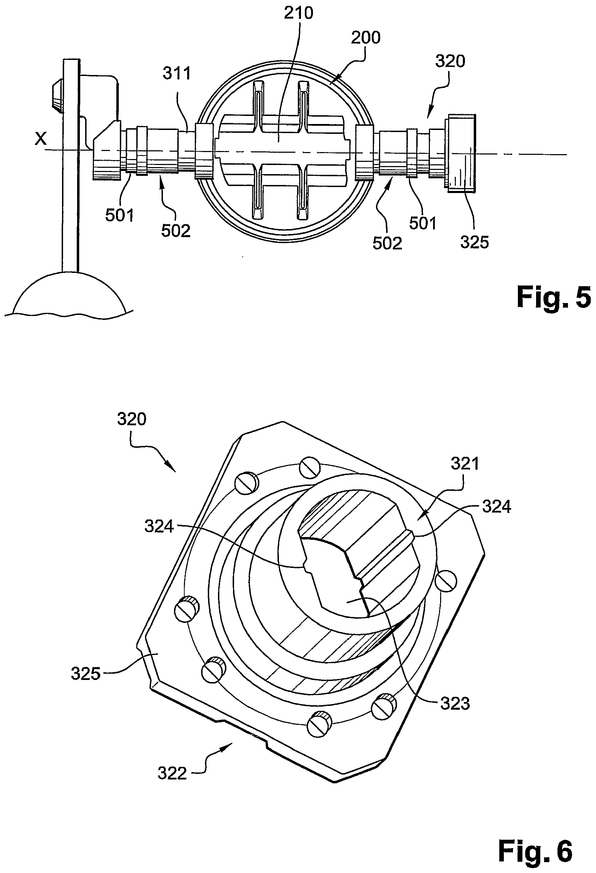

Toujours en référence à la figure 3, l'extrémité d'entraînement 321 de la coiffe 320 comprend un logement de blocage 323 destiné à recevoir l'extrémité libre 302 de l'arbre d'entraînement 300. Le logement de blocage 323 est longitudinal et s'étend dans le corps de la coiffe 320 selon l'axe X comme représenté sur la figure 6. Le logement de blocage 323 comprend ici deux rainures longitudinales 324 permettant à l'air, reposant dans le logement 323, de s'échapper lors de l'insertion de l'arbre d'entraînement 300 dans la coiffe 320, le méplat de liaison de l'arbre d'entraînement 300 s'emboîtant dans le logement de blocage 323 de la coiffe 320 pour les solidariser en rotation.

La coiffe 320 est de section oblongue, son diamètre étant égal à celui de la portion d'entraînement 311 de l'arbre d'entraînement 300. Ainsi, lorsque l'arbre 300 et la coiffe 320 sont emboîtés ensemble, ils forment un arbre dit principal dont le diamètre est constant des deux côtés du volet 200. La coiffe 320 est terminée à son extrémité libre 322 par une portion sensiblement carrée 325.

En référence à la figure 5, des paliers de guidage 501 de l'arbre d'entraînement 300 sont respectivement montés dans des ouvertures formées dans la conduite 100 pour le passage de l'arbre 300. Ces paliers 501 sont montés de part et autre du volet 200, comme représenté sur la figure 5, sur la portion d'entraînement 311 de l'arbre 300 et sur la coiffe 320 respectivement. Les paliers 501 se présentent sous la forme de roulements à billes dont le diamètre de berceau est identique.

Des moyens 502 d'étanchéité des ouvertures de la conduite sont ici montés avec les paliers de guidage 501 sur l'arbre d'entraînement 300 et sur la coiffe 320, évitant un risque de fuite de gaz de la conduite dans les ouvertures. Les moyens 502 d'étanchéité se présentent ici sous la forme de couronnes en élastomère. Il va de soi que d'autres moyens pourraient également convenir.

### ▪ Le volet d'obturation 200

Le volet d'obturation 200, comme représenté sur les figures 3 à 5, se présente sous la forme d'un disque circulaire en plastique sur lequel est monté un joint d'étanchéité circonférentiel 201 permettant d'assurer l'étanchéité entre la circonférence du volet 200 et la conduite de gaz.

Il va de soi que le volet 200 peut également avoir une forme oblongue, la section de la conduite étant alors adaptée. Avantageusement, une telle section oblongue permet de faciliter l'insertion du volet 200 dans la conduite par complémentarité de formes.

Un alésage 210 est formé diamétralement dans le volet 200 et s'étend selon l'axe X. La section de l'alésage 210 est ici oblongue et sensiblement égale à celle de la portion centrale 314 de l'arbre 300. Ainsi, l'arbre d'entraînement 300 peut être inséré sans difficulté par son extrémité libre 302 dans l'alésage 210 du volet 200 par complémentarité de formes, la portion centrale 314 de l'arbre 300 étant en contact avec l'alésage 210 après insertion. Une section de forme oblongue est particulièrement avantageuse car elle permet une meilleure transmission du couple moteur de l'arbre d'entraînement 300 au volet d'obturation 200.

Des nervures de renfort 202 sont formées, perpendiculairement à l'alésage 210, sur chacune des faces du volet 200 pour en augmenter la rigidité.

Lors de la rotation du bras moteur 313, le volet 200 est entraîné en rotation dans la conduite de gaz par l'arbre d'entraînement 300 monté dans les deux ouvertures de la conduite.

### ▪ Montage du volet d'obturation 200 dans la conduite de gaz

L'invention sera encore mieux comprise à l'aide d'un exemple de procédé de montage d'un volet d'obturation dans la conduite.

En référence aux figures 3 et 5, on insère le volet d'obturation 200 dans la conduite de gaz par une des sections d'entrée ou de sortie des gaz afin que l'alésage 210 du volet 200 soit orienté dans la direction X, perpendiculairement à l'axe de la conduite, et aligné avec les deux ouvertures formées diamétralement dans la conduite pour le passage de l'arbre 300.

On monte ensuite les deux paliers de guidage 501 avec les deux couronnes en élastomère 502 respectivement dans les deux ouvertures de la conduite de gaz.

On insère la coiffe 320 dans une première ouverture de la conduite en enfilant l'extrémité d'entraînement 321 de la coiffe 320 successivement dans le premier palier de guidage 501 et dans la première couronne en élastomère 502, la portion carrée 325 de la coiffe 320 dépassant à l'extérieur de la conduite.

Dans une autre mise en oeuvre du procédé de montage, on v la coiffe 320 avant le volet d'obturation 200 afin que la coiffe 320 facilite l'alignement et le centrage de l'alésage 210 dans la direction X.

Enfin, on introduit l'arbre d'entraînement 300 dans la deuxième ouverture de la conduite en introduisant son extrémité libre 302 successivement dans le palier de guidage 501, la couronne en élastomère 502, l'alésage 210 et enfin dans la coiffe 320, le méplat de l'arbre d'entraînement 300 s'emboîtant dans le logement de blocage 323 de la coiffe 320. Lors de l'introduction du méplat de liaison dans le logement de blocage 323, l'air reposant dans le logement 323 est chassé via les deux rainures longitudinales 324 formées dans le logement 323. La liaison entre l'arbre 300 et la coiffe 320 est alors étanche.

Après emboîtement, l'arbre 300 et la coiffe 320 sont solidaires en rotation et possèdent un diamètre égal hors de la conduite. L'ensemble d'obturation de la conduite de gaz, formé par le volet d'obturation 200 et l'arbre d'entraînement 300, est alors symétrique par rapport à un plan orthogonal à l'axe X comme représenté sur la figure 5. Des paliers de guidage 501 et des moyens d'étanchéité 502 identiques sont utilisés de part et autre du volet d'obturation 200, permettant, d'une part, un guidage homogène et usure répartie des paliers 501, et, d'autre part, une standardisation des paliers et des moyens d'étanchéité permettant des économies d'échelle et des facilités de stockage.

A l'aide d'un ou plusieurs ensembles d'obturation, on peut fabriquer des doseurs simples ou doubles pour réguler avec précision le flux de fluide dans une conduite.

## Revendications

1. Ensemble d'un volet d'obturation (200) d'une conduite de fluide et d'un arbre d'entraînement (300) dudit volet (200) s'étendant dans un alésage (210) formé dans le volet d'obturation (200),
- l'arbre d'entraînement (300) étant mené en rotation, d'un côté du volet (200), par une portion d'entraînement (311) de l'arbre (300) montée tourillonnante dans un premier palier rotatif (501),
- l'arbre d'entraînement (300) s'étendant de la portion d'entraînement (301) jusqu'à une portion d'extrémité (302),
ensemble **caractérisé par le fait que** ladite portion d'extrémité (302) est recouverte d'une coiffe (320), solidaire en rotation de l'arbre (300), de l'autre côté du volet (200), la coiffe (320) étant montée tourillonnante dans un deuxième palier (501) de même diamètre de berceau que le premier, la liaison entre l'arbre (300) et la coiffe (320) étant étanche.

2. Ensemble selon la revendication 1, dans lequel la portion d'extrémité (302) de l'arbre d'entraînement (300) comprend un méplat de liaison agencé pour s'emboîter dans un logement de blocage (323) ménagé dans la coiffe (320).

3. Ensemble selon l'une des revendications 1 à 2, dans lequel deux moyens d'étanchéité identiques (502) sont montés respectivement sur l'arbre d'entraînement (300) et la coiffe (320).

4. Ensemble selon l'une des revendications 1 à 3, dans lequel l'alésage (210) formé dans le volet d'obturation (200) est de section oblongue.

5. Ensemble selon l'une des revendications 1 à 4, dans lequel le logement de blocage (323) comprend au moins une rainure longitudinale (324) pour l'échappement de l'air lors de l'insertion de l'arbre d'entraînement (300) dans la coiffe (320).

6. Doseur simple de conduite de fluide comprenant un ensemble selon l'une des revendications précédentes.

7. Doseur double de conduite de fluide comprenant deux ensembles selon l'une des revendications 1 à 5.

8. Doseur simple ou double selon l'une des revendications 6 ou 7, **caractérisé par le fait que** le doseur est en plastique.

9. Procédé de montage d'un volet d'obturation (200) dans une conduite de fluide dans laquelle sont formées des ouvertures pour le passage d'un arbre (300) d'entraînement du volet d'obturation (200), procédé dans lequel:
- on introduit le volet (200) dans la conduite par une section de passage de fluide de la conduite;
- on introduit une coiffe (320) dans une première ouverture de la conduite, d'un côté du volet;
- on introduit l'arbre d'entraînement (300) successivement:
i. dans une deuxième ouverture de la conduite de l'autre côté du volet;
ii. dans un alésage (210) formé dans le volet d'obturation (200); et
iii. dans un logement de blocage (323) formé dans la coiffe (320), la coiffe (320) étant alors solidaire en rotation de l'arbre d'entraînement (300), la liaison entre l'arbre (300) et la coiffe (320) étant étanche.

## Patentansprüche

1. Einheit aus einer Verschlussklappe (200) einer Fluidleitung und einer Antriebswelle (300) der Klappe (200), die sich in einer in der Verschlussklappe (200) gebildeten Bohrung (210) erstreckt,
- wobei die Antriebswelle (300) auf einer Seite der Klappe (200) durch einen Antriebsabschnitt (311) der Welle (300) in Drehung versetzt wird, der in einem ersten Drehlager (501) drehend montiert ist,
- wobei die Antriebswelle (300) sich vom Antriebsabschnitt (301) bis zu einem Endabschnitt (302) erstreckt,
wobei die Einheit **dadurch gekennzeichnet ist, dass** der Endabschnitt (302) mit einer Kappe (320) bedeckt ist, die mit der Welle (300) auf der anderen Seite der Klappe (200) drehfest verbunden ist, wobei die Kappe (320) in einem zweiten Lager (501) gleichen Halterungsdurchmessers wie das erste drehend montiert ist, wobei die Verbindung zwischen der Welle (300) und der Kappe (320) dicht ist.

2. Einheit nach Anspruch 1, wobei der Endabschnitt (302) der Antriebswelle (300) eine Verbindungsabflachung enthält, die eingerichtet ist, um sich in eine in der Kappe (320) ausgesparte Blockieraufnahme (323) einzufügen.

3. Einheit nach einem der Ansprüche 1 bis 2, wobei zwei gleiche Dichtungseinrichtungen (502) auf die Antriebswelle (300) bzw. die Kappe (320) montiert sind.

4. Einheit nach einem der Ansprüche 1 bis 3, wobei die in der Verschlussklappe (200) gebildete Bohrung (210) einen länglichen Querschnitt hat.

5. Einheit nach einem der Ansprüche 1 bis 4, wobei die Blockieraufnahme (323) mindestens eine Längsrille (324) für den Austritt der Luft beim Einführen der Antriebswelle (300) in die Kappe (320) enthält.

6. Einfacher Fluidleitungsdosierer, der eine Einheit nach einem der vorhergehenden Ansprüche enthält.

7. Doppelter Fluidleitungsdosierer, der zwei Einheiten nach einem der Ansprüche 1 bis 5 enthält.

8. Einfacher oder doppelter Dosierer nach einem der Ansprüche 6 oder 7, **dadurch gekennzeichnet, dass** der Dosierer aus Kunststoff ist.

9. Verfahren zur Montage einer Verschlussklappe (200) in eine Fluidleitung, in der Öffnungen für den Durchgang einer Antriebswelle (300) der Verschlussklappe (200) ausgebildet sind, Verfahren, bei dem:
- die Klappe (200) durch einen Fluiddurchgangsquerschnitt der Leitung in die Leitung eingeführt wird;
- eine Kappe (320) in eine erste Öffnung der Leitung auf einer Seite der Klappe eingeführt wird;
- die Antriebswelle (300) nacheinander eingeführt wird:
i. in eine zweite Öffnung der Leitung auf der anderen Seite der Klappe;
ii. in eine in der Verschlussklappe (200) ausgebildete Bohrung (210); und
iii. in eine in der Kappe (320) ausgebildete Blockieraufnahme (323), wobei die Kappe (320) dann mit der Antriebswelle (300) drehfest verbunden ist, wobei die Verbindung zwischen der Welle (300) und der Kappe (320) dicht ist.

## Claims

1. Assembly of a shut-off flap (200) for blocking a fluid duct and of a drive shaft (300) for driving said flap (200) extending across a bore (210) formed in the shut-off flap (200),
- the drive shaft (300) being rotationally driven, on one side of the flap (200), by a drive portion (311) of the shaft (300) pivot-mounted in a first rotary bearing (501),
- the drive shaft (300) extending from the drive portion (301) as far as an end portion (302),
the assembly being **characterized in that** the said end portion (302) is covered by a cap (320), that rotates as one with the shaft (300), on the other side of the flap (200), the cap (320) being pivot mounted in a second bearing (501) with the same cradle diameter as the first, the connection between the shaft (300) and the cap (320) being a sealed connection.

2. Assembly according to Claim 1, in which the end portion (302) of the drive shaft (300) comprises a connecting flat designed to fit into an immobilising housing (323) formed in the cap (320).

3. Assembly according to one of Claims 1 to 2, in which two identical sealing means (502) are mounted respectively on the drive shaft (300) and the cap (320).

4. Assembly according to one of Claims 1 to 3, in which the bore (210) formed in the shut-off flap (200) is oblong in cross-section.

5. Assembly according to one of Claims 1 to 4, in which the immobilising housing (323) comprises at least one longitudinal groove (324) for air to escape as the drive shaft (300) is inserted into the cap (320).

6. Single fluid-duct metering device comprising an assembly according to one of the preceding claims.

7. Double fluid duct metering device comprising two assemblies according to one of Claims 1 to 5.

8. Single or double metering device according to one of Claims 6 and 7, **characterized in that** the metering device is made of plastic.

9. Method for mounting a shut-off flap (200) in a fluid duct in which openings are formed for the passage of a drive shaft (300) for driving the shut-off flap (200), in which method:
- the flap (200) is introduced into the duct via a fluid passage section of the duct;
- a cap (320) is introduced into a first opening in the duct, on one side of the flap;
- the drive shaft (300) is introduced in succession:
i. into a second opening of the duct on the other side of the flap;
ii. into a bore (210) formed in the shut-off flap (200); and
iii. into an immobilising housing (323) formed in the cap (320), the cap (320) then being rotationally secured to the drive shaft (300), the connection between the shaft (300) and the cap (320) being a sealed connection.
